(19) Europäisches Patentamt
European Patent Office
Office européen des brevets

(11) Publication number: 0 402 958 A1

# (12) EUROPEAN PATENT APPLICATION

(21) Application number: 90114726.4

(22) Date of filing: 19.06.87

This application was filed on 31 - 07 - 1990 as a divisional application to the application mentioned under INID code 60.

(30) Priority: 20.06.86 JP 144093/86
29.08.86 JP 203262/86

(43) Date of publication of application:
19.12.90 Bulletin 90/51

(60) Publication number of the earlier application in accordance with Art.76 EPC: 0 249 984

(84) Designated Contracting States:
BE CH DE FR GB IT LI NL SE

(51) Int. Cl.5: C08F 10/08, C08F 4/649

(71) Applicant: IDEMITSU PETROCHEMICAL CO. LTD.
1-1, Marunouchi 3-chome Chiyoda-ku
Tokyo 100(JP)

(72) Inventor: Yamawaki, Takashi
20-11, Sakuradai 4-chome
Ichihara-shi, Chiba-ken(JP)
Inventor: Imabayashi, Hideki
892 Anegasaki
Ichihara-shi, Chiba-ken(JP)
Inventor: Tanaka, Akira
2326 Anegasaki
Ichihara-shi, Chiba-ken(JP)
Inventor: Funabashi, Hideo
979 Anegasaki
Ichihara-shi, Chiba-ken(JP)
Inventor: Ohnishi, Rikuo
216 Imatsuasayama
Ichihara-shi, Chiba-ken(JP)

(74) Representative: TER MEER - MÜLLER - STEINMEISTER & PARTNER
Mauerkircherstrasse 45
D-8000 München 80(DE)

## (54) Process for producing butene-1 polymer.

(57) This invention provides a process for producing a butene-1 polymer in the presence of a catalyst obtained from a solid catalyst component (A) prepared from a magnesium compound, an electron donor and a titanium compound, an organoaluminum compound (B) and as an electron donating compound (C), a heterocyclic compound of the following general formula (1):

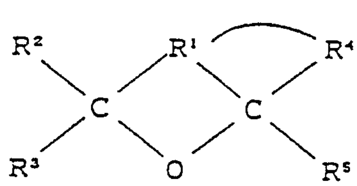

(1)

(wherein $R^1$ and $R^4$ each represents a hydrocarbon group and $R^2$, $R^3$ and $R^5$ each represents a hydrogen or a hydrocarbon group).

EP 0 402 958 A1

# PROCESS FOR PRODUCING BUTENE-1 POLYMER

## BACKGROUND OF THE INVENTION

This invention relates to a process for producing a butene-1 polymer used as material for molded products such as films, pipes, etc. and more particularly, it relates to a process for production of a butene-1 polymer of good stereoregularity and of high molecular weight in the presence of a highly active catalyst in a high yield.

Hitherto, there have been known the processes for production of olefin polymers which employ a highly active catalyst comprising combination of a solid catalyst component containing magnesium, titanium, a halogen and an electron donor as essential ingredients with an electron donating compound such as organoaluminum compound, ester, organosilicone compound or the like. (cf. Japanese Patent Unexamined Publication (Laid-open) Nos. 1004303/80, 115301/81, 63312/82 and 6205/84).

However, most of these processes cannot completely omit the cleaning step for removal of atactic polymers or the step for removal ashes. Furthermore, catalyst activity is not satisfactory and besides further improvements in properties of resulting polymers such as stereoregularity and molecular weight have been demanded.

A process has also been known to use a phosphite as electron donating compound in catalyst activity and stereoregularity of polymers, etc. are also insufficient.

As proposals for production of highly crystalline polybutene-1 polymers among olefin polymers, there have been many processes in which solution polymerization or slurry polymerization is carried out using titanium trichloride as a component of catalyst. However, it is expected that if butene-1 polymer can be produced by gas phase polymerization, not only simplification of process, but also reduction of production cost can be attained. Thus, there have been some proposals which indicate possibility of production of butene-1 polymer by gas phase polymerization.

However, there have been various problems for industrially carrying out the processes of these proposals.

For example, butene-1 polymer is higher in affinity to hydrocarbon solvents as compared with polyethylene or polypropylene. Therefore, when catalyst component is supplied to gas phase polymerization system, polymers agglomerate with each other due to a small amount of entrained solvent. As a result, stable operation or working of apparatus for long time becomes difficult.

Further, when gas phase polymerization is carried out using the conventionally widely used catalysts having titanium trichloride (Japanese Patent Unexamined Publication (Laid-open) No. 192716/85) or catalysts having magnesium chloride (Japanese Patent Unexamined Publication (Laid-open) No. 6205/84), catalyst activity is low and stereoregularity of resulting butene-1 polymer is insufficient and thus, merit of gas phase polymerization could not be efficiently utilized.

## SUMMARY OF THE INVENTION

It is an object of this invention to provide a process for producing, in high yields, a butene-1 polymer of high stereoregularity and high molecular weight using a highly active catalyst.

Another object of this invention is to provide a process for production of a butene-1 polymer of high stereoregularity by gas phase polymerization.

Still another object of this invention is to provide a process for production of a butene-1 polymer less in content of catalyst residues.

Still another object of this invention is to provide a process for production of a butene-1 polymer which can be appropriately molded into articles such as pipes, etc. under stable operating conditions.

The gist of this invention which solves above problems is a process for producing a butene-1 polymer by homopolymerization of butene-1 or copolymerization of butene-1 with other $\alpha$-olefins in the presence of a catalyst obtained from a solid catalyst component (A) obtained from a magnesium compound, a titanium compound, and an electron donor, an organoaluminum compound (B) and a hetrocyclic compound represented by the following general formula (1) used as an electron donating compound (C):

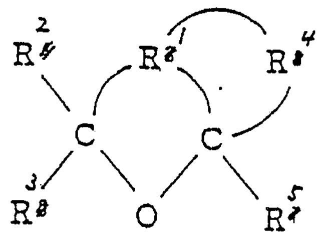

(1)

(wherein $R^1$ and $R^4$ each represents hydrocarbon group and $R^2$, $R^3$ and $R^5$ each represents hydrogen or hydrocarbon group).

## DETAILED DESCRIPTION OF THE INVENTION

The catalysts used in the process of this invention are highly active polymerization catalysts obtained from a solid catalyst component (A) obtained from a magnesium compound, a titanium compound, and an electron donor, an organoaluminum compound (B) and specific heterocyclic compound as an electron donating compound (C) and they can be prepared in the following manners.

RE: solid catalyst component(A):

Said solid catalyst component(A) is prepared by contacting a magnesium compound (A-1), a halogenated titanium compound (A-2) and an electron donor(A-3).

As examples of said magnesium compound (A-1), mention may be made of magnesium oxide, magnesium hydroxide, hydrotalcite, carboxylic acid salts of magnesium, magnesium dialkoxide, aryloxymagnesium, alkoxymagnesium halides, aryloxymagnesium halides, magnesium dihalides, organomagnesium compounds, and reaction products of organomagnesium compounds with an electron donor, halosilane, alkoxysilane, silanol and aluminum compound.

Of the above magnesium compounds, a magnesium dialkoxide is preferred.

Suitable magnesium dialkoxides have the following general formula (2):

$Mg(OR^6)_t(OR^7)_{2-t}$ (2)

(wherein $R^6$ and $R^7$ which may be identical or different each represents an alkyl, group of 1-10 carbon atoms cycloalkyl group or aryl group and t is a real number of 0-2).

Typical examples of the magnesium dialkoxides are as follows:

$Mg(-OCH_3)_2$、$Mg(-OC_2H_5)_2$、

$Mg(-OC_3H_7)_2$、$Mg(-OC_4H_9)_2$

$Mg(-OC_6H_{13})_2$、$Mg(-OC_8H_{17})_2$、

Mg (− O 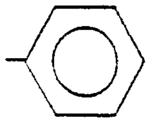 )2、Mg (− O 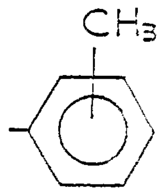 )2

Mg (− O 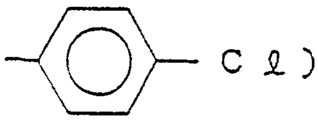 )2

Mg (− O 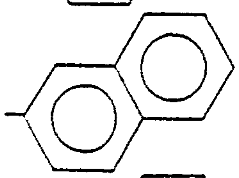 )2、

Mg (− O 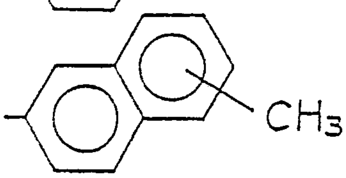 )2、

$Mg(-OCH_3)(-OC_2H_5)$、

Mg (− O C H3 ) (− O 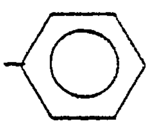 )、

Mg (− O C H3 ) (− O 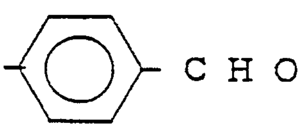 )、

Mg (− O C2 H5 ) (− O 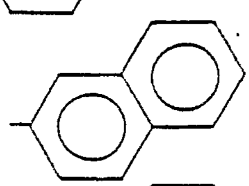 )、

Mg (− O C6 H11 ) (− O 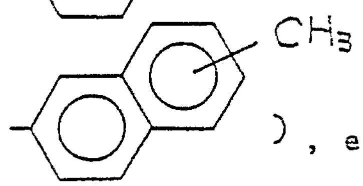 ), etc.

These magnesium dialkoxides may be used alone or in combination of two or more.

Among them, magnesium dialkoxides in which $R^5$ and $R^7$ are lower alkyl groups are preferred and magnesium dimethoxide and magnesium diethoxide are especially preferred.

As said titanium compound (A-2) which is one of the starting materials for the solid catalyst component (A), mention may be made of, for example, the following compounds:

Titanium tetrahalides such as $TiCl_4$, $TiI_4$, etc.;

alkoxytitanium trihalides such as $Ti(OCH_3)Cl_3$, $Ti(OC_2H_5)Cl_3$, $(n\text{-}C_4H_9O)TiCl_3$, $Ti(OC_2H_5)Br_3$, etc;

alkoxytitanium dihalides such as $Ti(OCH_3)_2Cl_2$. $Ti(OC_2H_5)_2Cl_2$, $(n\text{-}C_4H_9O)_2TiCl_2$, $Ti(OC_3H_7)_2Cl_2$, etc;

trialkoxytitanium monohalides such as $Ti(OCH_3)_3Cl$, $Ti(OC_2H_5)_3Cl$, $(n\text{-}C_4H_9O)_3TiCl$, $Ti(OCH_3)_3Br$, etc.;

tetraalkoxytitanium such as $Ti(OCH_3)_4$, $Ti(OC_2H_5)_4$, $Ti(n\text{-}C_4H_9O)_4$, etc..

These may be used alone or in combination of two or more.

Halides of tetravalent titanium are especially preferred as the titanium compounds (A-2).

Of these halides of tetravalent titanium, preferred are those of high halogen content and especially preferred is titanium tetrachloride.

As the electron donor (A-3) which is a starting material for the solid catalyst component (A), there may be used organic compounds containing oxygen, nitrogen, phosphorus or sulfur.

The electron donors (A-3) include, for example, amines, amides, ketones, nitriles, phosphines, phosphoramides, esters, ethers, thioethers, thioesters, acid anhydrides, acid halides, acid amides, aldehydes, organic acids, etc..

As typical examples thereof, mention may be made of organic acids such as aromatic carboxylic acids, e.g., benzoic acid, p-oxybenzoic acid, etc.; acid anhydrides such as succinic anhydride, benzoic anhydride, p-toluic anhydride, etc.; ketones of 3-15 carbon atoms such as acetone, methyl ethyl ketone, methyl isobutyl ketone, acetophenone, benzophenone, benzoquinone, etc.; aldehydes of 2-15 carbon atoms such as acetaldehyde, propinaldehyde, octylaldehyde, benzaldehyde, tolualdehyde, naphthylaldehyde, etc.; esters of 2-18 carbon atoms, e.g., monoesters such as methyl formate, methyl acetate, ethyl acetate, vinyl acetate, propyl acetate, octyl acetate, cyclohexyl acetate, ethyl propionate, ethyl valerate, methyl chloroacetate, ethyl dichloroacetate, methyl methacrylate, ethyl crotonate, ethyl pivalate, dimethyl maleate, ethyl cyclohexanecarboxylate, methyl benzoate, ethyl benzoate, propyl benzoate, butyl benzoate, octyl benzoate, cyclohexyl benzoate, phenyl benzoate, benzyl benzoate, methyl toluylate, ethyl toluylate, amyl toluylate, ethyl anisate, ethyl ethoxybenzoate, ethyl p-butoxybenzoate, ethyl o-chlorobenzoate and ethyl naphthoate, aromatic diesters such as dimethyl phthalate, diethyl phthalate, dipropyl phthalate, diisobutyl phthalate, methylethyl phthalate, methylpropyl phthalate, methylisobutyl phthalate, ethylpropyl phthalate, ethylisobutyl phthalate, propylisobutyl phthalate, dimethyl terephthalate, diethyl terephthalate, dipropyl terephthalate, diisobutyl terephthalate, methylethyl terephthalate, methylpropyl terephthalate, methylisobutyl terephthalate, ethylpropyl terephthalate, ethylisobutyl terephthalate, propylisobutyl terephthalate, dimethyl isophthalate, diethyl isophthalate, dipropyl isophthalate, diisobutyl isophthalate, methylethyl isophthalate, methylpropyl isophthalate, methylisobutyl isophthalate, ethylpropyl isophthalate, ethylisobutyl isophthalate and propylisobutyl isophthalate and ,γ-butyrolactone, δ-valerolactone, coumalin, phthalide, ethylene carbonate, etc.; acid halides of 2-15 carbon atoms such as acetyl chloride, benzyl chloride, toluic acid chloride, anisic acid chloride, etc.; ethers of 2-20 carbon atoms such as methyl ether, ethyl ether, isopropyl ether, n-butyl ether, amyl ether, tetrahydrofuran, anisole, diphenyl ether, ethylene glycol butyl ether, etc.; acid amides such as acetamide, benzamide, toluylamide, etc.; amines such as tributylamine, N.N′-dimethylpiperazine, tribenzylamine, aniline, pyridine, picoline, tetramethylethylenediamine, etc.; nitriles such as acetonitrile, benzonitrile, tolunitrile, etc.

Of these electron donors, especially preferred are esters, ethers, ketones and acid anhydrides and further especially preferred are alkyl esters of aromatic carboxylic acids, for example, alkyl esters (1-4 carbon atoms) of aromatic carboxylic acids such as benzoic acid, p-methoxybenzoic acid, p-ethoxybenzoic acid, toluic acid, etc., aromatic diesters such as diisobutyl phthalate. Furthermore, aromatic ketones such as benzoquinone, aromatic, carboxylic acid anhydrides, ethers such as ethylene glycol butyl ether are also preferred.

Re: Preparation of solid catalyst component (A)

Solid catalyst component (A) used when the specific organophosphorus compound represented by the general formula (1) is used as electron donating compound (C) can be prepared by the methods disclosed in Japanese Patent Unexamined Publication (Laid-Open) Nos. 43094/78, 135102/80, 135103/80, 811/81,

11908/81 and 18606/81.

Several examples of preparation of solid catalyst component (A) are explained below.

1) Maganesium compound (A-1) or complex compound of a magnesium compound and electron donor (A-3) with or without being ground is reacted with titanium compound (A-2) which is liquid under the reaction condition in the presence or absence of an electron donor, a grinding aid, etc. In this case, said electron donor is used at least once.

2) Liquid magnesium compound (A-1) having no reducibility is reacted with liquid titanium compound (A-2) in the presence of electron donor (A-3) to precipitate a solid titanium composite.

3) The product obtained in the above 1)or 2) is reacted with titanium compound (A-2).

4) The product obtained in the above 1) or 2) is reacted with electron donor (A-3) and titanium compound (A-2).

5) Magnesium compound (A-1) or a complex compound of magnesium compound (A-1) and electron donor (A-3) is ground in the presence or absence of an electron donor, grinding aid, etc. and in the presence of titanium compound (A-2) and then treated with a halogen or a halogen compound. In this case, said electron donor (A-3) is used at least once.

6) The compound obtained in the above 1)-4) is treated with a halogen or a halogen compound.

When the specific heterocyclic compound represented by the general formula (2) is used as electron donating compound (C), solid catalyst component (A) can be produced, for example, by contacting simultaneously or stepwise said magnesium dialkoxide, said electron donating compound and a halide of tetravalent titanium in a hydrocarbon solvent.

Preparation methods disclosed, for example, in Japanese Patent Unexamined Publication Nos. 166205/81, 63309/82, 190004/82, 300407/82, 47003/83, Japanese Patent Application No. 43670/86, etc. may also be included as suitable methods for preparation of said solid catalyst component (A) of this invention.

Further, solid catalyst component (A) can be prepared by contacting said electron donor, said halide of tetravalent titanium and a solid comprising said magnesium dialkoxide which is carried on an oxide of an element of Group II-IV of the periodic table, for example, silicon oxide, magnesium oxide, aluminum oxide, etc., preferably silicon oxide or a composite oxide containing at least one oxide of element of Group II-IV of the periodic table, for example, silica-alumina, in a solvent at 0-200 °C, preferably 10-150 °C for 2 minutes-24 hours.

Furthermore, the solid catalyst component (A) can be prepared by contacting said magnesium dialkoxide with said electron donor and then reacting at least twice a halide of tetravalent titanium with said magnesium dialkoxide which has been contacted with said electron donor. (cf. method disclosed in Japanese Patent Unexamined Publication No. 63309/82).

In preparation of the solid catalyst component, as said solvent, there may be used organic solvents inert to the magnesium dialkoxides, the electron donors and the halides of tetravalent titanium, for example, aliphatic hydrocarbons such as hexane, heptane, etc., aromatic hydrocarbons such as benzene, toluene, etc. and halogenated hydrocarbons such as mono and polyhalides of saturated or unsaturated aliphatic, alicyclic and aromatic hydrocarbons having 1-12 carbon atoms.

Re: Composition of the solid catalyst component (A)

The composition of the solid catalyst component (A) is 1-100, preferably 5-70 in magnesium/titanium atomic ratio, 3-200, preferably 4-100 in halogen/titanium atomic ratio and 0.1-10 in electron donor/titanium (molar ratio).

Re; Organoaluminum compound (B)

The organoaluminum compound (B) used in this invention has no special limitation and those represented by the following general formulas may be widely used:

$AlR^8_vX_{3-v}$

$Al_2R^8_3X_3$

(wherein $R^8$ is an alkyl, cycloalkyl or aryl group having 1-10 carbon atoms, v is a real number of 1-3 and X is a halogen atom such as chlorine, bromine, etc.).

As examples of the organoaluminum compounds, mention may be made of trialkylaluminum compounds such as trimethylaluminum, triethylaluminum, triisopropylaluminum, triisobutylaluminum, trioctylaluminum, etc., dialkylaluminum monohalides such as diethylaluminum monochloride,

diisopropylaluminum monochloride, diisobutylaluminum monochloride, dioctylaluminum monochloride, etc. and alkylaluminum sesquihalides such as ethylaluminum sesquichloride, etc.. These may be used alone or in combination of two or more. Of these compounds, preferred are trialkylaluminums and especially preferred is triisobutylaluminum.

Re: Electron donating compound(C)

One of the important points of this invention is to use as the electron donating compound (C) a heterocyclic compound represented by the general formula (1):

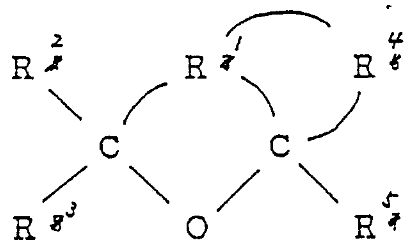

(1)

(wherein $R^1$ and $R^4$ each represents hydrocarbon group, preferably substituted or unsubstituted saturated or unsaturated hydrocarbon group of 2-5 carbon atoms and $R^2$, $R^3$ and $R^5$ each represents hydrogen or hydrocarbon group, preferably substituted or unsubstituted saturated or unsaturated hydrocarbon group of 2-5 carbon atoms).

As examples of the heterocyclic compounds, mention may be made of 1,4-cineole, 1,8-cineole, m-cineole, pinol, benzofuran, 2,3-dihydrobenzofuran (coumaran), 2H-chromene, 4H-chromene, chroman, isochroman, dibenzofuran, xanthene, etc..

These heterocyclic compounds may be used alone or in combination of two or more.

1,8-cineole is preferred among these compounds.

If electron donating compounds other than said heterocyclic compounds for example, phosphites, silane compounds and aromatic esters are used, catalytic activity is low and stereoregularity of resulting polymers is also low.

Re: Composition of catalyst

Composition of each ingredient of the catalyst of polymerization of olefins is as follows. The solid catalyst component (A): 0.0005-1 mmol in terms of titanium atom for 1 l of reaction volume; the organoaluminum compound (B): 0.1-1000, preferably 1-500 in aluminum/titanium atomic ratio; and the electron donating compound (C): 0.1-500, preferably 0.5-200 mols of the heterocyclic compound for one mol of titanium atom.

Re: Polymerization

This invention relates to a process for production of butene-1 homopolymer or copolymer which comprises homopolymerizing butene-1 or copolymerizing butene-1 with other α-olefins in the presence of the above-mentioned catalyst.

For polymerization, there may be used any of gas phase polymerization, bulk polymerization with use of liquid monomer as a solvent, slurry polymerization, etc.. From the point of catalytic activity, gas phase polymerization and bulk polymerization are especially preferred. In this invention the gas phase polymerization is the most preferred.

When gas phase polymerization method is used, the step for recovery of polymerization solvent can be omitted and the step for drying resulting polymer can be greatly simplified and besides the tendency of agglomeration of the resulting polymer is further diminished.

When homopolymer is produced, this may be produced by feeding, only butene-1 to a polymerizer and effecting polymerization at 40-90 °C under 1-30 kg/cm$^2$G, preferably 1-15 kg/cm$^2$G.

Especially, when magnesium dialkoxide and heterocyclic compound are selected as the magnesium

compound and the electron donating compound(C), respectively, it is important to use a polymerization temperature of 45-70 °C, preferably 50-65 °C. If the polymerization temperature is lower than 45 °C, polymerization rate cannot be increased and removal of polymerization heat becomes difficult. If the polymerization temperature is higher than 70 °C, the resulting polymer particles agglomerate or stick to wall to make polymerization difficult and further, catalytic activity decreases to make smooth polymerization impossible.

When butene-1 random copolymer is produced, copolymerization can be effected by feeding butene-1 and other α-olefins to a polymerizer so that butene-1 content in the copolymer is 60-99.5% by weight, preferably 70-98% by weight.

Said other α-olefins include, for example, straight chain monoolefins such as propylene, ethylene, hexene-1, octene-1, etc. branched monoolefins such as 4-methyl-pentene-1, etc. and dienes such as butadine, etc..

In order to obtain butene-1 polymers having preferable properties, propylene is preferably used as the other α-olefins.

When so-called block copolymers are produced by gas phase polymerization method, using the first polymerizer and the second polymerizer connected in series, propylene, etc. are fed with heating to 90 °C or lower under a pressure of 1-30 $kg/cm^2G$ to carry out the first stage polymerization to produce a polymer in an amount of 1-20% by weight of total amount of finally obtained polymer and in the second polymerizer, only butene-1 or butene-1 and other α-olefin such as propylene are fed to the reaction product transferred from the first polymerizer or the reaction product of the first stage from which unreacted other olefin such as propylene and other vaporized components are removed as gases by providing a degassing device between the first polymerizer and the second stage polymerizer and the second stage polymerization is effected at 90 °C or less and under 1-30 $kg/cm^2G$ with keeping the reaction system at fluidized state to produce a copolymer containing 1-30% by weight of the other α-olefin. If necessary, a pre-polymerization of a small amount of the other olefin, e.g., propylene or butene-1 may be effected before the first stage polymerization

Molecular weight of the polymer can be controlled by adjusting hydrogen concentration in the polymerizer. Further, the catalyst may be fed as a suspension in an inert solvent, α-olefin, etc..

In the process of this invention, post-treatments after polymerization can be carried out by the conventional methods. That is, in the case of gas phase polymerization, nitrogen stream may be passed through polymer powder discharged from polymerizer after polymerization to remove olefins, etc. contained in the polymer powder. Furthermore, if necessary, the polymer powder may be pelletized by extruders and in this case, a small amount of water, alcohol, etc. may be added to completely deactivate the catalysta. In the case of bulk polymerization method, monomers are completely removed from the polymer discharged from polymerizer after polymerization and then the polymer may be pelletized.

According to this invention, a process for production of butene-1 polymer can be provided which have the following advantages:

1) Since highly active catalysts are used, residual amount of catalysts remaining in the polymerization product can be diminished and a step for removal of catalyst residue from the resulting butene-1 polymer can be omitted.

2) A polymer powder having a high bulk density of at least 0.28 g/cc can be obtained and so this is convenient for powder transportation.

3) The polymer obtained has a (η) of 1.0-7.0 dl/g (decalin solution, 135 °C) and is superior in stereoregularity (I.I.) (insolubles after subjected to Soxhlet extraction with boiling diethyl ether for 6 hours) and creep resistance and so it can be molded into articles of good appearance such as pipe, etc..

4) When gas phase polymerization is employed, a step for recovery of polymerization solvent can be omitted and the step of drying of the resulting polymer can be markedly simplified.

This invention is further illustrated by the following examples and comparative examples.

Example 1

(1) Preparation of solid catalyst component

In a well dried 10 l four-necked flask were charged 5 l of dehydrated and purified n-hexane, 500 g (4.4 mol) of magnesium diethoxide and 94.6 g (0.34 mol) of diisopropyl phthalate and reaction was effected for one hour under reflux. Then, temperature was adjusted to 90 °C, 2.5 kg (132 mol) of titanium tetrachloride

was added dropwise over a period of 50 minutes and reaction was further effected for 2 hours at 90° C. Thereafter, temperature was adjusted to 30° C and supernatant liquid was extracted, followed by addition of 7 l of n-heptane and stirring. This was then left to stand and supernatant liquid was extracted. This operation was repeated twice, followed by washing. Thereafter, to thus washed supernatant liquid was freshly added 5 l of n-heptane, temperature was adjusted to 70° C, 2.5 kg (132 mol) of titanium tetrachloride was added dropwise and reaction was effected at 90° C for 2 hours. Thereafter, supernatant liquid was extracted at 80° C, followed by addition of 7 l of n-heptane and washing. The washing was repeated until no chlorine was detected to obtain a solid catalyst component. Amount of titanium carried therein was measured by colorimetry to find that 2.6% by weight of titanium was contained.

(2) Preparation of catalyst

The solid catalyst component obtained in the above (1) was diluted to 2 mmol Ti/l and was introduced into a catalyst preparation tank. To this catalyst preparation tank were fed 30 mmol/l of triisobutylaluminum and 12 mmol/l of 1,8-cineole. Thereafter, propylene was fed thereto in an amount of 50 g per 1 mmol of titanium. The catalyst preparation tank was heated to 40° C to carry out the reaction for preparation of catalyst.

(3) Production of butene-1 homopolymer

To a fluidized bed polymerizer of 300 mm in diameter and 100 l in capacity were fed a Ti catalyst slurry obtained by readjusting the catalyst prepared in the above (1) to 3.6 mmol/l in terms of Ti atom at a flow rate of 0.15 l/hr, triisobutylaluminum at a flow rate of 60 mmol/hr and 1,8-cineole at a flow rate of 24mmol/hr. Butene-1 and $N_2$ gas were fed thereto at a superficial velocity of gas of 35 cm/sec by adjusting butene-1 partial pressure to 3 kg/cm$^2$ and nitrogen partial pressure to 4 kg/cm$^2$. Discharge of polymer was controlled so that amount of polymer in the polymerizer was kept constant. Polymerization temperature was 60° C.

Intrinsic viscosity ($\eta$), I.I., bulk density, residual titanium (fluorescent X-ray method), residual chlorine (fluorescent X-ray method) and creep resistance (ASTM D2990) of the polymer obtained are shown in Table 1.

Example 2

Gas phase polymerization was effected in the same manner as in Example 1 except that flow rate of the Ti catalyst slurry was 0.075 l/hr and hydrogen partial pressure was 0.06 kg/cm$^2$.

Properties of the polymer obtained are shown in Table 1.

Example 3

(1) Preparation of solid catalyst component

Solid catalyst component was prepared in the same manner as in Example 1 (1).

(2) Preparation of catalyst

Catalyst was prepared in the same manner as in Example 1 (2).

(3) Production of propylene-butene-1 copolymer

A propylene-butene-1 copolymer was produced in the same manner as in Example 1 except that propylene and hydrogen were additionally fed to the polymerizer and propylene partial pressure was

adjusted to 0.3 kg/cm$^2$ and hydrogen partial pressure was adjusted to 0.09 kg/cm$^2$. Properties of the polymer obtained are shown in Table 1.

Example 4

(1) Preparation of solid catalyst component

500 g of a calcined silicon oxide (manufactured by Fuji Davidson Co.; grade: 952, specific surface area: 350 m$^2$/g and average particle size: 54-65$\mu$m) and 1.5 l of trimethylchlorosilane were charged in a glass container of 5 l in capacity which had been purged with argon and reaction was effected for 12 hours under reflux with stirring followed by decantations of 5 times with n-heptane and then drying.

To 500 g of the resulting solid compound was added 2.5 l of an n-heptane solution containing diethoxymagnesium (2500 mmol) and tetra-n-butoxytitanium (1550 mmol) to allow the solid compound to contact with the solution at room temperature for 1 hour. Then, 1250 ml of isopropanol was added dropwise thereto, followed by stirring at 80° C for 1 hour, decantations of 3 times with 5 l of n-heptane and vacuum drying at 80° C for 1 hour to obtain a white catalyst carrier. This catalyst carrier contained 3.3% by weight of magnesium atom.

In a glass container of 5 l were charged 375 g of thus obtained catalyst carrier and further 2.5 l of n-heptane, 95 mmol of diisobutyl phthalate and 2250 g of titanium tetrachloride. The resulting mixture was stirred for 2 hours at 90° C. Then, the wupernatant liquid was removed by decantation and the resulting solid portion was well washed with hot n-heptane to obtain a solid catalyst component, which contained 3.2% by weight of Ti.

(2) Preparation of catalyst

Catalyst was prepared in the same manner as in Example 1 (2).

(3) Production of butene-1 homopolymer

Butene-1 homopolymer was produced in the same manner as in Example 1 (3). Properties of the resulting polymer are shown in Table 1.

Comparative Example 1

(1) Preparation of solid catalyst component

Solid catalyst component was prepared in the same manner as in Example 1.

(2) Preparation of catalyst

Catalyst was prepared in the same manner as in Example 1 except that 1 mmol of diphenyldimethoxysilane was used in place of 1,8-cineole.

(3) Production of butene-1 homopolymer

The polymer was produced in the same manner as in Example 1 except that diphenyldimethoxysilane was fed at a flow rate of 3mmol/hr in place of the additionally fed 1,8-cineole.

Properties of the obtained butene-1 homopolymer are shown in Table 1. This butene-1 homopolymer was extremely inferior in hue and low in stereoregularity and so pipes molded therefrom had no commercial value. Further, powder property of the resulting polymer was poor and continuous operation of the

polymerization apparatus was difficult.

Comparative Example 2

(1) Preparation of solid catalyst component

Solid catalyst component was prepared in the same manner as in Example 1.

(2) Preparation of catalyst

Catalyst was prepared in the same manner as in Comparative Example 1.

(3) Production of butene-1 polymer

Butene-1 polymer was produced in the same manner as in Comparative Example 1 (3) except that hydrogen was additionally fed at a flow rate of 0.02 $kg/cm^2$.

The resultant polymer was low in molecular weight and besides high in residual metal content and so could be hardly used as element for making pipes.

Comparative Example 3

(1) Preparation of solid catalyst component

The catalyst component was prepared in the same manner as in Example 1.

(2) Preparation of catalyst

The catalyst was prepared in the same manner as in Example 1.

(3) Production of butene-1 homopolymer

The polymer was produced in the same manner as in Example 1 except that flow rate of the Ti catalyst slurry was 0.27 l/hr, polymerization temperature was 40 °C and partial pressure of butene-1 was 2 $kg/cm^2$.

The resulting polymer contained a large amount of residual metals and was unsuitable for making pipes therefrom.

Comparative Example 4

(1) Preparation of solid catalyst component

This was prepared in the same manner as in Example 1.

(2) Preparation of catalyst

This was also prepared in the same manner as in Example 1.

(3) Production of butene-1 homopolymer

The polymer was produced in the same manner as in Example 1 except that flow rate of Ti catalyst slurry was 0.48 l/hr and polymerization temperature was 75 °C.

The obtained polymer was low in molecular weight and contained a large amount of residual metals and could not be used for making pipes therefrom.

Comparative Example 5

(1) Preparation of solid catalyst component

In a well dried four-necked flask of 10 l in capacity were charged 5 l of dehydrated and purified n-hexane, 500 g (4.4 mols) of magnesium chloride and 132 g (0.38 mol) of ethyl benzoate and reaction was effected for 1 hour under reflux, followed by adjusting the temperature to 70 °C, adding dropwise 4.2 kg (22 mols) of titanium tetrachloride over a period of 50 minutes and carrying out further reaction for 3 hours under reflux. Supernatant liquid was extracted at 30 °C and 7 l of n-heptane was added thereto, followed by stirring. This was left to stand and supernatant liquid was extracted. This operation was repeated twice and the collected supernatant liquid was washed. Thereafter, 5 l of n-hexane was further added and the temperature was adjusted to 70 °C. Thereto was added dropwise 4.2 kg (22 mols) of titanium tetrachloride over a period of 30 minutes and reaction was effected for 3 hours under reflux. Then, temperature was elevated to 80 °C and supernatant liquid was extracted and 7 l of n-heptane was added to carry out washing. The washing was repeated until no chloride ion was detected to obtain a solid catalyst component. Amount of titanium carried therein was measured by colorimetry to find that 2.6% by weight of titanium was contained.

Average particle size of the solid catalyst component was 20 µm and geometrical standard deviation $\sigma g$ of particle size distribution was 1.8.

(2) Preparation of catalyst

This was prepared in the same manner as in Example 1 (2).

(3) Production of butene-1 homopolymer

The polymer was produced in the same manner as in Example 1 (3) except that to the fluidized bed polymerizer were fed the readjusted Ti catalyst slurry at a flow rate of 0.15 l/hr, triisobutylaluminum at a flow rate of 160 mmol/hr and methyl toluylate at a flow rate of 7.5 mmol/hr in place of cineole and the partial pressure of additionally fed hydrogen was adjusted to 0.15 kg/cm$^2$.

Properties of thus obtained polymer are shown in Table 1.

Table 1

| | Examples | | Comparative Examples | | | | | Examples | |
|---|---|---|---|---|---|---|---|---|---|
| | 1 | 2 | 1 | 2 | 3 | 4 | 5 | 3 | 4 |
| Carrier-magnesium compound, magnesium compound | $Mg(OC_2H_5)_2$ | $Mg(OC_2H_5)_2$ | $Mg(OC_2H_5)_2$ | $Mg(OC_2H_5)_2$ | $Mg(OC_2H_5)_2$ | $Mg(OC_2H_5)_2$ | $MgCl_2$ | $Mg(OEt)_2$ | Silica-$Mg(OEt)_2$ |
| Electron donor | Diisopropylphthalate | Diisopropylphthalate | Diisopropylphthalate | Diisopropylphthalate | Diisopropylphthalate | Diisopropylphthalate | Ethylbenzoate | Diisopropylphthalate | Diisobutylphthalate |
| Electron donationg compound (C) | 1,8-Cineole | 1,8-Cineole | Silane | Silane | 1,8-Cineole | 1,8-Cineole | Methyltoluylate | 1,8-Cineole | 1,8-Cineole |
| Polymerization temperature (°C) | 60 | 60 | 60 | 60 | 40 | 75 | 60 | 60 | 60 |
| $H_2$ / monomer (molar ratio) | 0 | 0.02 | 0 | 0.007 | 0.03 | 0 | 0.05 | 0.03 | 0.01 |
| Activity (kg PB/g-Ti) | 100 | 200 | 8 | 28 | 56 | 31 | 32 | 167 | 111 |
| Intrinsic viscosity [$\eta$] | 4.8 | 3.2 | 4.9 | 2.3 | 4.5 | 2.3 | 2.2 | 2.1 | 5.2 |
| I.I (%) | 96 | 98 | 85 | 98 | 95 | 93 | 92 | - | 98 |
| Bulk density (g/cc) | 0.37 | 0.39 | 0.25 | 0.35 | 0.35 | 0.31 | 0.27 | 0.36 | 0.36 |
| Residual Ti (ppm) | 10 | 5 | 120 | 36 | 18 | 32 | 31 | 6 | 9 |
| Residual Cl (ppm) | 160 | 80 | 2500 | 600 | 300 | 540 | 520 | 90 | 60 |
| Propylene/butene-1 (molar ratio) | - | - | - | - | - | - | - | 0.1 | - |
| Creeping resistance | 4500 | 3800 | 850 | 1500 | 4100 | 1200 | 1100 | - | 5000 |

## Claims

1. A process for producing a butene-1 polymer by homopolymerization of butene-1 or copolymerization of butene-1 with other α -olefin in the presence of a catalyst consisting essentially of a solid catalyst component (A) obtained from a magnesium compound, an electron donor and a tetravalent titanium compound, an organoaluminum compound (B) and an electron donating compound (C), characterized in that:

the electron donating compound (C) is a heterocyclic compound represented by the following general formula:

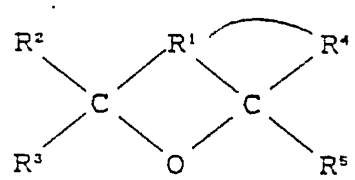

wherein $R^1$ and $R^4$ each represents hydrocarbon group and $R^2$, $R^3$ and $R^5$ each represents hydrogen or hydrocarbon group;

the magnesium compound is a magnesium dialkoxide represented by the formula: $Mg(OR^6)_t(OR^7)_{2-t}$ wherein $R^6$ and $R^7$ each represents an alkyl group of 1-10 carbon atoms, cycloalkyl group or aryl group and t is a real number of 0-2;

the organoaluminum compound (B) has the general formula: $AlR^8{}_vX_{3-v}$ or $Al_2R^8{}_3X_3$ wherein $R^8$ is an alkyl, cycloalkyl or aryl group of 1-10 carbon atoms, v is a real number of 1-3 and X is a halogen atom; and

the polymerization is carried out under gas phase polymerization condition at a reaction temperature of 45-70 °C.

2. The process as claimed in claim 1, characterized in that the magnesium compound is a magnesium dialkoxide.

3. The process as claimed in claim 2, characterized in that the magnesium dialkoxide is magnesium diethoxide.

4. The process as claimed in claim 1, characterized in that the tetravalent titanium compound is a tetravalent titanium halide.

5. The process as claimed in claim 4, characterized in that the tetravalent titanium halide is titanium tetrachloride.

6. The process as claimed in claim 1, characterized in that the electron donor is an aromatic carboxylic acid ester.

7. The process as claimed in claim 1, characterized in that the organoaluminum compound (B) is triisobutylaluminum.

8. The process as claimed in claim 1, characterized in that the heterocyclic compound is 1,8-cineole.

European Patent Office

# EUROPEAN SEARCH REPORT

Application Number

EP 90 11 4726

| DOCUMENTS CONSIDERED TO BE RELEVANT | | | |
|---|---|---|---|
| Category | Citation of document with indication, where appropriate, of relevant passages | Relevant to claim | CLASSIFICATION OF THE APPLICATION (Int. Cl.5) |
| A | US-A-4 256 866 (N.M. KARAYANIS et al.)<br>* Whole document *<br>--- | 1 | C 08 F 10/08<br>C 08 F 4/649 |
| A | EP-A-0 135 358 (MITSUI PETROCHEM.)<br>* Claims *<br>----- | 1 | |
| | | | TECHNICAL FIELDS SEARCHED (Int. Cl.5) |
| | | | C 08 F |

The present search report has been drawn up for all claims

| Place of search | Date of completion of the search | Examiner |
|---|---|---|
| THE HAGUE | 27-09-1990 | DE ROECK R.G. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P0401)